# EUROPÄISCHE PATENTSCHRIFT

(11) **EP 2 691 437 B1**
(45) Veröffentlichungstag und Bekanntmachung des Hinweises auf die Patenterteilung: **21.11.2018**
(21) Anmeldenummer: 12710703.5
(22) Anmeldetag: 21.03.2012
(51) Int. Cl.: C08G 18/71, C08G 65/22, C08G 65/333, C08G 65/336, C09J 171/02

(54) **HÄRTBARE ZUSAMMENSETZUNG MIT BEI DER HÄRTUNG ALKOHOL FREISETZENDEN BESTANDTEILEN**
CURABLE COMPOSITION HAVING CONSTITUENTS WHICH LIBERATE ALCOHOL DURING CURING
COMPOSITION DURCISSABLE COMPRENANT DES ÉLÉMENTS CONSTITUTIFS LIBÉRANT DE L'ALCOOL LORS DU DURCISSEMENT

(30) Priorität: 29.03.2011 DE 102011006313
(43) Veröffentlichungstag der Anmeldung: 05.02.2014
(73) Patentinhaber: Evonik Degussa GmbH, 45128 Essen (DE)
(72) Erfinder: BRUGGER, Bastian, Matthias, 46049 Oberhausen (DE); ROESSING, Melanie, 46119 Oberhausen (DE); GIESSLER-BLANK, Sabine, 44227 Dortmund (DE); VOM BRUCH, Beatrix, 45701 Herten (DE)
(86) Internationale Anmeldenummer: PCT/EP2012/054942
(87) Internationale Veröffentlichungsnummer: WO 2012/130673

(56) Entgegenhaltungen:
- EP-A1- 2 174 971
- EP-A1- 2 194 086
- EP-A1- 2 289 961
- EP-A1- 2 289 972
- EP-A1- 2 415 796
- EP-A1- 2 415 797

## Beschreibung

Die vorliegende Erfindung betrifft eine härtbare Zusammensetzung enthaltend zumindest ein nicht-ausschließlich terminal alkoxysilyliertes Alkoxylierungsprodukt und zumindest einen Härtungskatalysator, welche dadurch gekennzeichnet ist, dass das nicht-ausschließlich terminal alkoxysilylierte Alkoxylierungsprodukt ein Prepolymer ist, das im Mittel zwischen 2,0 und 8,0 Ethoxysilyl-Funktionen pro Prepolymer aufweist, wobei bei einer feuchtigkeitsinduzierten Härtung das Gewichtsverhältnis zwischen freigesetztem Ethanol zu anderen Alkoholen, insbesondere Methanol größer 10 : 1 beträgt oder als Alkohol ausschließlich Ethanol freigesetzt wird, dadurch gekennzeichnet, dass die Zusammensetzung einen oder mehrere Haftvermittler und/oder einen oder mehrere chemische Feuchtigkeits-Trocknungsmittel enthält, wobei sie als Haftvermittler 3-Aminopropyltriethoxysilan und/oder (3-Aminopropy)methyldiethoxysilan und/oder als chemisches Feuchtigkeits-Trocknungsmittel Vinyltriethoxysilan enthält, sowie Dicht- und/oder Klebstoffe, die diese härtbare Zusammensetzung enthalten und die Verwendung der härtbaren Zusammensetzung bzw. der Dicht- und Klebstoff.

Alkoxysilan-terminierte Polymere werden nun schon seit geraumer Zeit als Basis für Kleb- und Dichtstoffe mit einem breiten Anwendungsspektrum eingesetzt. Hierzu gehören die unter dem Namen MS-Polymer® vertriebenen Polyether-basierten Produkte der Firma Kaneka, genauso wie die silylmodifizierten Polyurethane verschiedener anderer Hersteller, beispielsweise die Desmoseal® S Produkte der Firma Bayer. Die zu Grunde liegende Chemie führt bei diesen Produkten zu Alkoxysilylfunktionen ausschließlich am Kettenende der Polymere; das Einbringen von mehr als einer Alkoxysilylgruppe je Kettenende ist nicht möglich.

Bei den verwendeten Alkoxysilanfunktionen handelt es sich zumeist um Methyl-di-Methoxysilane, seltener um tri-Methoxysilane. Wenn Ethoxysilane, welche bei der Härtung im Gegensatz zu Methoxysilanen kein Methanol, sondern Ethanol abspalten, verwendet werden, reicht häufig die Härtungsgeschwindigkeit nicht aus, so dass ein technischkommerzieller Einsatz als Dicht- und/oder Klebstoff nicht möglich ist. Die Schrift "Geniosil - Organofunktionelle Silane von WACKER" (http://www.wacker.com/cms/media/publications/downloads/6085_DE.pdf, online abgerufen am 20.02.2011) stellt auf Seite 11 den Zusammenhang zwischen Art der Alkoxysilanfunktion und der Hautbildezeit, welche die oberflächlich beginnende Härtung beschreibt, dar. Hier wird beschrieben, dass bei gleicher chemischer Umgebung der Silanfunktion Triethoxysilane gegenüber Trimethoxysilanen eine mehr als 4 mal längere Zeit bis zum Einsetzen der Hautbildung benötigen (> 2 Stunden zu 25 Minuten). Dieser massive Unterschied in der Reaktivität wirkt sich folglich nicht nur auf die Härtung der Oberfläche, sondern auch auf die Härtung in die Tiefe, insbesondere innerhalb der ersten 24 Stunden, aus. Propoxysilane oder Isopropoxysilane weisen keine ausreichende Reaktivität zum Einsatz in bei Raumtemperatur härtenden Kleb- oder Dichtstoffformulierungen auf.

Werden trotzdem Basispolymere verwendet, die bei der Härtung Ethanol abspalten, werden zur chemischen Trocknung und/oder zur Haftvermittlung mit Untergründen zusätzlich methoxyfunktionelle Silane bzw. Methoxy-Aminosilane eingesetzt, so dass bei der Härtung der kompletten Formulierung wiederum Methanol freigesetzt wird. Ein sehr typischer Vertreter für chemische Trocknungsmittel ist das Vinyltrimethoxysilan; bei den Haftvermittlern findet man häufig Abkömmlinge der Aminopropyltrimethoxysilane.

Die Freisetzung von Methanol ist mit Hinblick auf die schädliche Wirkung von Methanol problematisch. Insbesondere in Innenräumen oder in schlecht gelüfteten Bereichen ist das Nervengift Methanol bedenklich. Ein geringeres Risiko geht hier vom Ethanol aus. Daher wäre es wünschenswert Kleb- und/oder Dichtstoffe zu verwenden, die bei der Härtung ausschließlich Ethanol und kein Methanol abspalten.

Die Aufgabe der vorliegenden Erfindung bestand deshalb darin, härtbare Zusammensetzungen bereitzustellen, die bei der Härtung Ethanol und nur geringe Mengen oder vorzugsweise kein Methanol freisetzen und über eine Härtungscharakteristik verfügen, die einen technisch-kommerziellen Einsatz als Kleb- und/oder Dichtstoff möglich macht.

Gelöst wird diese Aufgabe durch den Einsatz einer speziellen Auswahl von in der DE 10 2010 038768 und DE 10 2010 038774 vorgestellten Prepolymeren, die bei der Härtung ausschließlich Ethanol freisetzen, sowie gegebenenfalls durch Einsatz spezieller Trocknungsmittel und/oder Haftvermittler.

Gegenstand der vorliegenden Erfindung ist eine härtbare Zusammensetzung enthaltend zumindest ein nicht-ausschließlich terminal alkoxysilyliertes Alkoxylierungsprodukt, zumindest einen Härtungskatalysator, dadurch gekennzeichnet, dass das nicht-ausschließlich terminal alkoxysilylierte Alkoxylierungsprodukt ein Prepolymer ist, das im Mittel zwischen 2,0 und 8,0 Ethoxysilyl-Funktionen, vorzugsweise Di- und/oder Tri-Ethoxysilylfunktionen je Prepolymer aufweist.

Weiterer Gegenstand der vorliegenden Erfindung ist Verwendung von erfindungsgemäßen Zusammensetzungen zur Verstärkung, Nivellierung, Modifikation, Verklebung, Abdichtung und/oder Beschichtung von Substraten.

Die erfindungsgemäße härtbare Zusammensetzung hat den Vorteil, dass bei einer feuchtigkeitsinduzierten Härtung das Gewichtsverhältnis zwischen freigesetztem Ethanol zur Summe der anderen freigesetzten Alkohole, insbesondere zu freigesetztem Methanol mindestens 10 : 1, bevorzugt mindestens 20 : 1 und besonders bevorzugt 50 : 1 bis 200 : 1 beträgt oder ganz besonders bevorzugt ausschließlich Ethanol freigesetzt wird.

Ein weiterer Vorteil der erfindungsgemäßen Zusammensetzung besteht darin, dass die Härtung mit Geschwindigkeit erfolgt, die mit der Härtungsgeschwindigkeit von auf dem Markt befindlichen Methoxysilyl-Gruppen basierte Zusammensetzungen vergleichbar ist.

Die erfindungsgemäßen Zusammensetzungen, das Verfahren zu deren Herstellung sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben, um das Zahlenmittel. Werden nachfolgend Stoffeigenschaften, wie z. B. Viskositäten oder ähnliches angegeben, so handelt es sich, wenn nicht anders angegeben, um die Stoffeigenschaften gemessen bei 25 °C und ggf. einer Scherrate von 10 s⁻¹.

Im Rahmen der vorliegenden Erfindung umfasst der Begriff Alkoxylierungsprodukte oder Polyether sowohl Polyether, Polyetherole, Polyetheralkohole, Polyetherester aber auch Polyethercarbonate, die gegebenenfalls synonym zueinander verwendet werden. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die erfindungsgemäße, härtbare Zusammensetzung enthaltend zumindest ein nicht-ausschließlich terminal alkoxysilyliertes Alkoxylierungsprodukt A und zumindest einen Härtungskatalysator, zeichnet sich dadurch aus, dass das nicht-ausschließlich terminal alkoxysilylierte Alkoxylierungsprodukte ein Prepolymer ist, das im Mittel zwischen 2,0 und 8,0, besonders bevorzugt zwischen 2,25 und 6,5 und insbesondere bevorzugt 2,5 bis 5,0 Ethoxysilyl-Funktionen je Prepolymer aufweist.

Es kann vorteilhaft sein, wenn das nicht-ausschließlich terminal alkoxysilylierte Alkoxylierungsprodukt als Alkoxysilylgruppen ausschließlich Ethoxysilylgruppen aufweist. In der erfindungsgemäßen Zusammensetzung sind vorzugsweise Alkoxylierungsprodukte A enthalten, bei denen alle Ethoxysilylgruppen Triethoxysilylgruppen sind. Besonders bevorzugte Zusammensetzungen weisen Alkoxylierungsprodukte A auf, die als Alkoxysilylgruppen ausschließlich Triethoxysilylgruppen aufweisen.

Die in den erfindungsgemäßen Zusammensetzungen enthaltenen nicht-ausschließlich terminal alkoxysilylierte Alkoxylierungsprodukte A können z. B. mit einem Verfahren wie in EP 2093244 (US 2010/0041910), DE 10 2010 038768 oder DE 10 2010 038774 beschreiben, hergestellt werden.

Nach der EP 2093244, deren Offenbarung in Bezug auf die dort offenbarten Strukturen, Formel I, II, III und Formel VIII, hiermit vollumfänglich als Teil dieser Beschreibung eingebracht wird, konnten erstmals Alkoxysilylgruppen tragende Alkoxylierungsprodukte hergestellt werden, die im Gegensatz zum bis dahin bekannten Stand der Technik Alkoxysilylgruppen entlang der Polyetherkette blockartig oder statistisch verteilt aufweisen und nicht nur an den Termini der Kette lokalisiert sind. Weiterhin zeichnen sich diese Verbindungen durch eine reaktionsbedingt endständige OH-Gruppe aus.

Aus dem Vorhandensein der OH-Gruppe und den hydrolyseempfindlichen Alkoxysilylgruppen in einem Molekül rührt die intrinsische Reaktivität der Verbindungen und leichte Vernetzbarkeit unter Bildung dreidimensionaler polymerer Netzwerke her. Allerdings haben Versuche auch gezeigt, dass die Reaktivität der OH-Gruppe gegebenenfalls zu hoch liegt um eine für die Anforderungen die an 1-Komponentige Kleb- und Dichtstoffformulierungen ausreichende Lagerstabilität zu erreichen. Unter Lagerstabilität wird in diesem Kontext die Stabilität gegen Vernetzung bzw. Vergelung der fertigen, Katalysator enthaltende, Formulierung bei Lagerung in einer marktüblichen Dickwandkartusche verstanden. Zu den genannten Verbindungen gehören insbesondere solche der Formel (I).

Die verschiedenen Monomereinheiten der Alkoxylierungsprodukte der Formel (I) sowohl der Fragmente mit den Indexzahlen d bis j als auch der eventuell vorhandenen Polyoxyalkylenkette des Substituenten R¹ können untereinander blockweise aufgebaut sein oder aber auch einer statistischen Verteilung unterliegen. 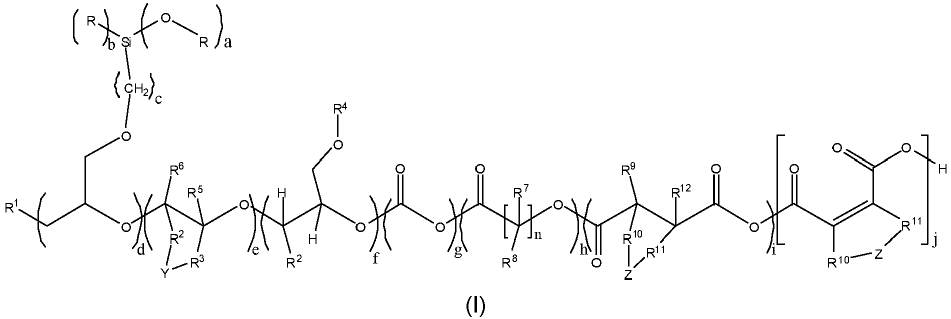 wobei
sich die Definitionen der Indizes aus der Offenbarung der EP 2 093 244 ergeben.

Die Kettenlänge der als Startverbindung einsetzbaren Alkoxy-, Arylalkoxy- oder Alkylarylalkoxygruppen aufweisenden Polyetherreste ist beliebig. Vorzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.

Die so hergestellten Verbindungen gewähren die synthetische Freiheit, zwischen Alkoxysilylgruppen aufweisenden Polyoxyalkylenverbindungen zu wählen, die Alkoxysilylfunktionen sowohl terminal, als auch isoliert, blockartig kumuliert als aber auch statistisch eingestreut in die Polyoxyalkylenkette enthalten.

Die Alkoxylierungsprodukte der Formel (I) zeichnen sich dadurch aus, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere können beliebig blockartig aneinander gereiht oder statistisch in die Polymerkette eingebaut sein. Die durch die Reaktion unter Ringöffnung der Reaktionskomponenten in die entstehende Polymerkette eingefügten Fragmente sind in ihrer Sequenz untereinander frei permutierbar, mit der Einschränkung, dass cyclische Anhydride sowie Kohlendioxid statistisch insertiert, also nicht in homologen Blöcken, in der Polyetherstruktur vorliegen.

Die verschiedenen Fragmente der in der Formel (I) angegebenen Siloxanketten können statistisch verteilt sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden.

Alkoxylierungsprodukte der Formel (I) weisen Alkoxysilylgruppen substituierten Ketten auf, die durch die Wahl der Fragmente d bis j, entsprechend der durch die Reaktion unter Ringöffnung der Reaktionskomponenten in die Polymerkette eingefügten Fragmente, gezielt hochfunktionalisiert sind und damit für verschiedenartige Anwendungsgebiete zugeschnitten werden können.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (I) und/oder (III).

Je nach verwendetem epoxidfunktionellem Alkoxysilan und evtl. eingesetzten weiteren Monomeren, sowie evtl. auch Kohlendioxid können ester- oder carbonat-modifizierte Silylpolyether erhalten werden. Bevorzugt ist die Alkoxysilyleinheit in der Verbindung der Formel (I) eine Trialkoxysilyleinheit.

Wie ²⁹Si-NMR- und GPC-Untersuchungen ergeben, bedingt durch das verfahrensbedingte Vorhandensein von kettenendständigen OH-Gruppen die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R gegen einen langkettigen modifizierten Alkoxysilylpolymerrest ausgetauscht. Bimodale wie auch multimodale GPC Kurven belegen, dass die Alkoxylierungsprodukte neben den nicht umgeesterten Spezies, wie sie in Formel (I) wiedergegeben sind, solche mit der doppelten, zum Teil dreifachen oder gar vielfachen Molmasse enthalten. Formel (I) gibt mithin die komplexe chemische Realität nur vereinfacht wieder.

Somit stellen die Alkoxylierungsprodukte Mischungen dar, die auch Verbindungen enthalten, in denen die Summe der Indices (a) plus (b) in Formel (I) im statistischen Mittel kleiner als 3 ist, da ein Teil der OR-Gruppen durch Silylpolyethergruppen ersetzt werden kann. Die Zusammensetzungen enthalten somit Spezies, die am Siliziumatom unter Abspaltung von ROH und Kondensationsreaktion mit der reaktiven OH-Gruppe eines weiteren Moleküls der Formel (I) ausgebildet werden. Diese Reaktion kann mehrfach ablaufen bis z.B. alle RO-Gruppen am Silizium gegen weitere Moleküle der Formel (I) ausgetauscht sind. Das Vorhandensein von mehr als einem Signal in typischen ²⁹Si-NMR-Spektren dieser Verbindungen untermauert das Auftreten von Silylgruppen mit unterschiedlichem Substitutionsmuster.

Die angegebenen Werte und Vorzugsbereiche für die Indizes (a) bis (j) der Verbindungen der Formel (I) sind somit auch nur als Mittelwerte über die verschiedenen, einzeln nicht fassbaren Spezies zu verstehen. Die Vielfalt an chemischen Strukturen und Molmassen spiegelt sich auch in den für Alkoxylierungsprodukte der Formel (I) typischen und für konventionelle DMC-basierende Polyether völlig ungewöhnlichen breiten Molmassenverteilungen von M_{w}/Mₙ von meist > 1,5 wider.

Bei den Methoden des Standes der Technik können nur Silylgruppen-terminierte Präpolymere gebildet werden. Die als Reaktivkomponente erfindungsgemäß eingesetzten Alkoxylierungsprodukte unterscheiden sich von nach klassischen Methoden modifizierten Oligomeren oder Polymeren darin, dass durch den gezielten Kettenaufbau und die variable Insertion von funktionellen Gruppen in blockartiger aber auch isolierter Weise Strukturen gebildet werden, die sowohl eine Silyl-Funktionalisierung verstreut oder blockartig verteilt über die gesamte Kette aufweisen und zudem zusätzlich aber nicht zwingend erforderlich auch an den Termini eine Silylfunktionalisierung tragen können.

Untrennbar mit dem in der EP 2 093 244 dargelegten Verfahren der Alkoxylierung von expoxyfunktionellen Alkoxysilanen verbunden, ist die Besonderheit, dass an den Termini immer eine OH-Funktionalität vorhanden ist, hervorgegangen aus der Epoxidringöffnung des jeweils letzten Epoxidmonomers unter Anknüpfung an das OH-funktionelle Ende der wachsenden Kette.

In den noch unveröffentlichten Patentanmeldungen DE 10 2010 038768 und der DE 10 2010 038774 war es Ziel die Absenkung der Reaktivität der OH-Gruppe von hydroxylgruppenterminierten Alkoxylierungsprodukten der Formel (I), die nicht ausschließlich terminale Alkoxysilylgruppen tragen, zu ermöglichen.

Dabei konnte gezeigt werden, dass sich durch die Reduzierung der Reaktivität der OH-Gruppen die Lagerstabilität und auch die Bruchdehnung des gehärteten/polymerisierten alkoxysilylierten Alkoxylierungsprodukts massiv verbessern lässt.

Durch die Einführung einer Endverkappung der Hydroxylgruppe am Kettenende des Präpolymers konnte dies erreicht werden.

Bevorzugt in der erfindungsgemäßen Zusammensetzung enthaltene Alkoxylierungsprodukte A sind Prepolymere der allgemeinen Formel (III), 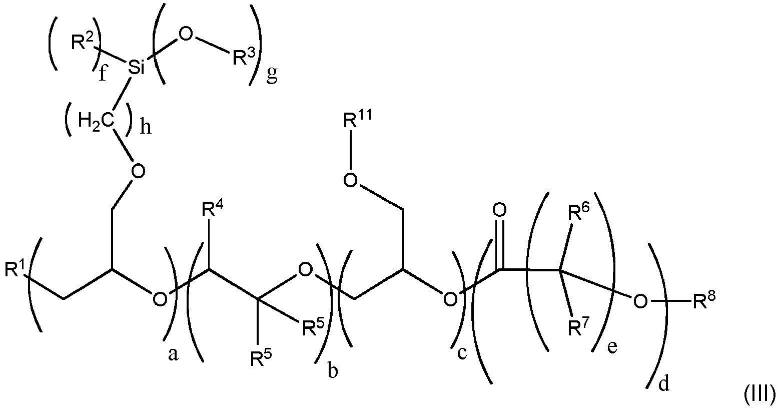 mit
R¹ = ein über ein Sauerstoffatom angebundener 1- bis 6-fach funktioneller gesättigter oder ungesättigter, linearer oder verzweigter organischer Rest, vorzugsweise vom Typ einer Alkoxy-, Arylalkoxy- oder Alkylarylalkoxygruppe, bei der die Kohlenstoffkette durch Sauerstoffatome unterbrochen sein kann und auch seitenständige Alkoxysilylgruppen enthaltende Substituenten tragen kann oder direkt mit Alkoxysilylgruppen substituiert ist, ausgewählt aus der Gruppe der Polyoxyalkylenreste, Polyetherreste, einen Polyetheralkoxyrest oder einer einfach oder mehrfach annelierten phenolischen Gruppe entspricht, oder von einem einfach oder mehrfach hydroxyliertem Alkohol, Polyetherol, Polyesterol, Siloxan, perfluorierten Polyetherol, (poly)-Urethan oder Zucker abgeleitet sein kann,
R² = eine Alkylgruppe mit 1 bis 2 Kohlenstoffatomen,
R³ = eine Alkylgruppe mit 2 Kohlenstoffatomen,
R⁴ = unabhängig voneinander ein Wasserstoffradikal oder eine Alkylgruppe mit 1 bis 8 Kohlenstoffatomen,
R⁵ = unabhängig voneinander ein Wasserstoffradikal, eine Alkylgruppe mit 1 bis 20 Kohlenstoffatomen, eine Aryl- oder Alkarylgruppe,
R⁶ und R⁷ = unabhängig voneinander gleich R⁵,
R⁸ = ein Trialkylsilyl-Endblock oder ein Urethan-Endblock oder Esterendblock, der aus der Reaktion einer endständigen Alkoholfunktion mit hydroxylgruppenreaktiven Verbindungen enthaltend den Rest R⁸ hervorgegangen ist, insbesondere eine Endgruppe der Formel IV 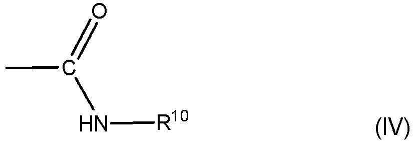 wobei
   R¹⁰ = unabhängig voneinander eine lineare oder verzweigte, gesättigte oder ungesättigte, gegebenenfalls weiter substituierte Alkylgruppe mit 1 bis 30 Kohlenstoffatomen, eine Aryl- oder Alkarylgruppe, bevorzugt Methyl-, Ethyl-, Propyl-, Isopropyl-, Butyl-, iso-Butyl-, Octyl-, Decyl-, Dodecyl-, Phenyl-, Toluyl-, Benzyl-, Isopropylphenyl- oder Stearylgruppe, besonders bevorzugt Methyl-, Ethyl-, Propyl-, Isopropyl-, Butyl-, Phenyl-, Toluyl-, Isopropylphenyl- oder Stearylgruppe oder eine Gruppe -A(T)ₓ ist, mit A = Kohlenwasserstoffrest, vorzugsweise mit 2 bis 16 Kohlenstoffatomen, der ggf. mit Halogenatomen substituiert sein kann, x = 1 bis 4, vorzugsweise 1 oder 2, bevorzugt 1, und T gleich oder verschieden -N=C=O, -NH-C(O)-X, mit X = O-R¹² oder NH-R¹², wobei R¹² gleich oder verschieden Kohlenwasserstoffrest, der mit Heteroatomen unterbrochen sein kann, vorzugsweise ein gesättigter oder ungesättigter Kohlenwasserstoffrest, bevorzugt gesättigter Kohlenwasserstoffrest, der keine Heteroatome aufweist, wobei der Kohlenwasserstoffrest vorzugsweise von 1 bis 30, bevorzugt von 2 bis 18 und besonders bevorzugt von 3 bis 10 Kohlenstoffatome aufweist, und insbesondere ein Methyl-, Ethyl-, Propyl, oder Butyl-Rest, bevorzugt ein Butylrest ist, oder X ein Polyetherrest, vorzugsweise ein Polyetherrest mit einer Molmasse zwischen 49 g/mol und 1999 g/mol, bevorzugt zwischen 99 g/mol und 1199 g/mol, und besonders bevorzugt ein Butanolgestarteter Propylenoxid-Polyetherrest mit einer Molmasse von 300 bis 500 g/mol, oder X ein Rest der Formel IIIa 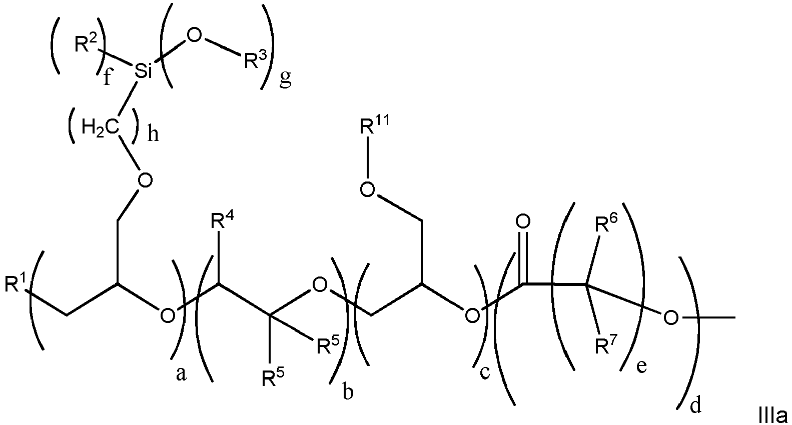
   mit R¹ bis R⁷, R¹¹ und a bis h wie für Formel III definiert, wobei X vorzugsweise kein Rest der Formel IIIa ist,
   a = 0 bis 1000 ist, bevorzugt 0 bis 50, besonders bevorzugt größer 0 bis 10 ist mit der Maßgabe, dass a größer oder gleich 2 sein muss, wenn R¹ keine Substituenten mit Alkoxysilylgruppen trägt oder selbst nicht direkt mit Alkoxysilylgruppen, insbesondere mit Ethoxysilylgruppen, besonders bevorzugt Triethoxysilygruppen, substituiert ist,
   b = 0 bis 1000, bevorzugt 1 bis 800, besonders bevorzugt 30 bis 500 und insbesondere 80 bis 300,
   c = unabhängig voneinander gleich b,
   d = unabhängig voneinander gleich b,
   mit der Maßgabe, dass die Summe von a, b, c und d mindestens 3 ist,
   mit der Maßgabe, dass die Gruppen mit den Indices a, b, c und d frei permutierbar über die Molekülkette sind, aber mindestens mehr als eine Gruppe mit dem Index a nicht terminal in der Polymerkette angeordnet ist,
   e = 1 bis 10,
   g + f = 3 und g mindestens gleich 2 ist,
   h = 2, 3, 4 und mit der Maßgabe, dass
   die verschiedenen Monomereinheiten sowohl der Fragmente mit den Indices a, b, c, und d untereinander, als auch innerhalb der Polyoxyalkylenkette des Substituenten R¹ , blockweise aufgebaut sein können oder aber einer statistischen Verteilung unterliegen und zudem untereinander frei permutierbar sind.

Die mittleren Molmassen M_{w} der Alkoxylierungsprodukte A, insbesondere der Prepolymere der Formel (III) liegen vorzugsweise zwischen 8.000 bis 40.000 g/mol, bevorzugt zwischen 10.000 und 20.000 g/mol. Vorzugsweise sind die Verbindungen der Formel (III) bei Raumtemperatur flüssig.

Es kann vorteilhaft sein, wenn die erfindungsgemäße Zusammensetzung nur Prepolymere der Formel (III) mit R⁸ wie oben definiert und keine Prepolymere der Formel (III) aufweist, bei denen R⁸ gleich Wasserstoff ist.

Es kann aber auch vorteilhaft sein, wenn die erfindungsgemäße Zusammensetzung neben Prepolymeren der Formel (III) mit R⁸ wie oben definiert auch solche Prepolymeren der Formel (III) aufweist, bei den R⁸ gleich Wasserstoff ist. Liegen beide Arten von Prepolymeren in der erfindungsgemäßen Zusammensetzung vor, so beträgt das Massenverhältnis (Verhältnis der Massenteile) von Prepolymeren der Formel (III) mit R⁸ wie oben definiert zu Prepolymeren der Formel (III), bei denen R⁸ gleich Wasserstoff ist, von 100:>0 bis 10:90, bevorzugt zwischen 95:5 und 15:85 und besonders bevorzugt zwischen 80:20 und 30:70. Vorzugsweise weisen auch die Prepolymeren der Formel (III), bei denen R⁸ gleich Wasserstoff ist, als Alkoxysilygruppen überwiegend oder ausschließlich, vorzugsweise ausschließlich Ethoxysilylgruppen, bevorzugt Triethoxysilylgruppen auf.

Der Rest R¹ entstammt vorzugsweise einer hydroxylgruppenhaltigen Verbindung der Formel (II)

R¹-H (II)

mit R¹ = R^{X}-O- und R^{x} = angebundener 1- bis 6-fach funktioneller gesättigter oder ungesättigter, linearer oder verzweigter organischer Rest, vorzugsweise vom Typ einer Alkoxy-, Arylalkoxy- oder Alkylarylalkoxygruppe, bei der die Kohlenstoffkette durch Sauerstoffatome unterbrochen sein kann und auch seitenständige Alkoxysilylgruppen enthaltende Substituenten tragen kann oder direkt mit Alkoxysilylgruppen substituiert ist, wobei die Alkoxysilylgruppen nicht terminal auftreten dürfen, ausgewählt aus der Gruppe der Polyoxyalkylenreste, Polyetherreste, einen Polyetheralkoxyrest oder einer einfach oder mehrfach annelierten phenolischen Gruppe entspricht, oder von einem einfach oder mehrfach hydroxyliertem Alkohol, Polyetherol, Polyesterol, Siloxan, perfluorierten Polyetherol, (poly)-Urethan oder Sorbit abgeleitet sein kann.

Vorzugsweise ist die Verbindung der Formel (II) ausgewählt aus der Gruppe der Alkohole, Polyetherole oder Phenole. Bevorzugt wird als Startverbindung ein ein- oder mehrwertiger Polyetheralkohol oder Alkohol oder auch Wasser eingesetzt. Es kann vorteilhaft sein, wenn Verbindungen der Formel (II) eingesetzt werden, deren Rest R¹ einen oder mehrere Alkoxylsilygruppen, vorzugsweise Ethoxysilylgruppen und bevorzugt Triethoxysilylgruppen aufweist.

Vorteilhaft werden niedermolekulare Polyetherole mit 1 bis 8 Hydroxylgruppen und Molmassen von 50 bis 2000 g/mol, die ihrerseits zuvor durch DMC-katalysierte Alkoxylierung hergestellt wurden, als Starterverbindungen die den Rest R¹ enthalten, verwendet.

Beispielhaft für die hydroxylgruppenhaltigen Verbindungen seien Wasser, Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Cellulosezucker, Lignin oder auch weitere auf Naturstoffen basierende, Hydroxylgruppen tragende Verbindungen, genannt.

Sofern im Umfang dieser Erfindung auf Naturstoffe Bezug genommen wird, z.B. Sorbit, sind grundsätzlich alle Isomeren damit gemeint, bevorzugt sind die jeweils in der Natur vorkommenden Isomere, im hier genannte Falle also das D-Sorbit, (2R,3R,4R,5S)-Hexan-1,2,3,4,5,6-hexaol (CAS RN 50-70-4). Zur Definition von Naturstoffen wird auf den Umfang des "Dictionary of Natural Products", Chapman and Hall/CRC Press, Taylor and Francis Group, z.B. in der online Ausführung von 2011: http://dnp.chemnetbase.com/ verwiesen.

Neben Verbindungen mit aliphatischen und cycloaliphatischen OH-Gruppen eignen sich beliebige Verbindungen mit 1 bis 20 phenolischen OH-Funktionen. Hierzu gehören beispielsweise Phenol, Alkyl- und Arylphenole, Bisphenol A und Novolake.

Die verschiedenen Monomereinheiten sowohl der Fragmente der Verbindungen der Formel (III) mit den Indices a, b, c, und d als auch der eventuell vorhandenen Polyoxyalkylenkette des Substituenten R¹ können untereinander blockweise aufgebaut sein oder aber auch einer statistischen Verteilung unterliegen und zudem untereinander frei permutiert werden. Die Abfolge der Monomereinheiten im entstehenden Polymer hängt allein von der Dosierungsreihenfolge und der Reaktivität der zugrundeliegenden Moleküle ab.

Der Anteil der Alkoxylierungsprodukte A, das im Mittel zwischen 2,0 und 8,0, Ethoxysilyl-Funktionen pro Polymerrückgrad aufweist, an der erfindungsgemäßen Zusammensetzung beträgt vorzugsweise von 10 bis kleiner 80 Gew.-%, bevorzugt von 18 bis 65 Gew.-%, und besonders bevorzugt von 21 Gew.-% bis 64 Gew.-%.

Als Härtungs-Katalysatoren (für die Vernetzung oder Polymerisation der erfindungsgemäßen Zusammensetzung oder deren chemische Fixierung auf Partikel- oder makroskopischen Oberflächen) können die üblicherweise zur Hydrolyse und Kondensation von Alkoxysilanen eingesetzten Katalysatoren eingesetzt werden. Vorzugsweise werden als Härtungs-Katalysatoren organischen Zinnverbindungen, wie z.B. Dibutylzinndilaurat, Dioctylzinndilaurat, Dibutylzinndiacetylacetonat, Dibutylzinndiacetat, Dibutylzinndioctoat, oder Dioctylzinndiacetylacetonat, bevorzugt Dibutylzinndiacetylacetonat oder Dioctylzinndiacetylacetonat, besonders bevorzugt Dioctylzinndiacetylacetonat eingesetzt. Bevorzugt sind solche Katalysator und Zubereitungen die beim Kontakt mit Feuchtigkeit innerhalb der ersten 48 Stunden weniger als 0,5 Gew.-% ihrer Masse an Methanol freisetzen, besonders bevorzugt sind Katalysatoren die bei Kontakt mit Feuchtigkeit kein Methanol freisetzen.

Der Anteil der Härtungs-Katalysatoren an der erfindungsgemäßen Zusammensetzung beträgt vorzugsweise von 0,1 Gew.-% bis 5,00 Gew.-%, bevorzugt von 0,15 bis 2,00 Gew.-% und besonders bevorzugt von 0,2 bis 0,75 Gew.-%, bezogen auf die Gesamtzusammensetzung.

Die erfindungsgemäße Zusammensetzung kann weitere Zusatzstoffe ausgewählt aus der Gruppe der Weichmacher, Füllstoffe, Lösungsmittel, Haftvermittler, Additive zur Anpassung des Fließverhaltens, sogenannten Rheologieadditiven und Trocknungsmittel, insbesondere chemische Feuchtigkeits-Trocknungsmittel enthalten.

Die erfindungsgemäße Zusammensetzung enthält einen oder mehrere Haftvermittler und/oder ein oder mehrere chemische Feuchtigkeits-Trocknungsmittel wie in den Ansprüchen beschrieben.

Der Anteil der Haftvermittler, insbesondere an solchen, die als Alkohol ausschließlich Ethanol abspalten, an der erfindungsgemäßen Zusammensetzung beträgt vorzugsweise von größer 0 bis 3,0 Gew.-%, bevorzugt von 0,7 bis 2,5 Gew.-% und besonders bevorzugt von 1,0 bis 2,0 Gew.-% bezogen auf die Gesamtzusammensetzung.

Der Anteil der Trocknungsmittel an der erfindungsgemäßen Zusammensetzung beträgt vorzugsweise von größer 0 bis 5 Gew.-%, bevorzugt von 0,2 bis 3 Gew.-% bezogen auf die Gesamtzusammensetzung.

Die erfindungsgemäße Zusammensetzung kann einen oder mehrere Zusatzstoffe ausgewählt aus der Gruppe der Weichmacher, Füllstoffe, Lösungsmittel und Additive zur Anpassung des Fließverhaltens (Rheologieadditive) enthalten.

Die Weichmacher können z. B. ausgewählt werden aus der Gruppe der Phthalate, der Polyester, Alkylsulfonsäureester des Phenols, Cyclohexandicarbonsäureester oder auch der Polyether. Als Weichmacher werden nur solche Verbindungen eingesetzt, die von den Alkoxylierungsprodukten A verschieden sind.

Wenn Weichmacher in der erfindungsgemäßen Zusammensetzung vorhanden sind, beträgt der Anteil der Weichmacher an der erfindungsgemäßen Zusammensetzung vorzugsweise von größer 0 Gew.-% bis 90 Gew.-%, bevorzugt 2 Gew.-% bis 70 Gew.-%, besonders bevorzugt 5 Gew.-% bis 30 Gew.-% bezogen auf die Gesamtzusammensetzung.

Als Füllstoffe können z. B. gefällte oder gemahlene Kreide, anorganische Carbonate im allgemeinen, gefällte oder gemahlene Silikate, gefällte oder pyrogene Kieselsäuren, Glaspulvern, Glashohlkugeln (sog. Bubbles), Metalloxiden, wie z.B. TiO₂, Al₂O₃, natürliche oder gefällte Bariumsulfate verstärkende Fasern, wie Glasfasern oder Kohlefasern, lang oder kurzfaserige Wollastonite, Kork, Ruß oder Graphit eingesetzt werden. Vorteilhaft können hydrophobierte Füllstoffe eingesetzt werden, da diese Produkte einen geringeren Wassereintrag aufweisen und die Lagerstabilität der Formulierungen verbessern.

Wenn Füllstoffe in der erfindungsgemäßen Zusammensetzung vorhanden sind, beträgt der Anteil der Füllstoffe an der erfindungsgemäßen Zusammensetzung vorzugsweise von 1 bis 65 Gew.-% bezogen auf die Gesamtzusammensetzung, wobei für die hier genannten Füllstoffe mit Ausnahme der pyrogenen Kieselsäuren Konzentrationen von 30 bis 65 Gew.-% besonders bevorzugt sind. Werden pyrogene Kieselsäuren verwendet ist ein Anteil der pyrogenen Kieselsäuren von 5 bis 18 Gew.-% besonders bevorzugt.

Als Rheologieadditive, vorzugsweise zusätzlich zum Füllstoff enthalten, können aus der Gruppe der Amidwachse, zu beziehen z.B. von Cray Valley unter dem Markennamen Crayvallac®, gehärtete Pflanzenöle und Fette, pyrogene Kieselsäuren, wie z.B. Aerosil® R202 oder R805 (beide zu beziehen von Evonik) oder Cab-O-Sil® TS 720 oder TS 620 oder TS 630 (Cabot) ausgewählt werden. Werden pyrogene Kieselsäuren bereits als Füllstoff verwendet, kann die Zugabe eines Rheologieadditivs entfallen.

Wenn Rheologieadditive in der erfindungsgemäßen Zusammensetzung vorhanden sind, beträgt der Anteil der Rheologieadditive an der erfindungsgemäßen Zusammensetzung je nach gewünschtem Fließverhalten vorzugsweise von größer 0 Gew.-% bis 10 Gew.-%, bevorzugt von 2 Gew.-% bis 5 Gew.-% bezogen auf die Gesamtzusammensetzung.

Als Lösungsmittel sind solche Flüssigkeiten bevorzugt, die frei von Methanol sind und die vorzugsweise < 0,05 Gew-%, bezogen auf das Lösungsmittel an Wasser aufweisen. Als Lösungsmittel können z. B. Toluol, Tetrahydrofuran, Dimethylsulfoxyd, Dimethylformamid, Ethanol und Isopropanol eingesetzt werden. Bevorzugt wird Toluol, Dimethylsulfoxyd oder Tetrahydrofuran, besonders bevorzugt Tetrahydrofuran als Lösungsmittel eingesetzt.

Bei Bedarf können die erfindungsgemäßen Zusammensetzungen außerdem eine oder mehrere Substanzen, ausgewählt aus der Gruppe umfassend Co-Vernetzer, Flammschutzmittel, Entlüfter, antimikrobielle und konservierende Stoffe, Farbstoffe, Färbemittel und Pigmente, Frostschutzmittel, Fungizide und/oder Reaktivverdünner sowie Komplexbildner, Sprühhilfsmittel, Netzmittel, Duftstoffe, Lichtschutzmittel, Radikalfänger, UV-Absorber und Stabilisatoren, insbesondere Stabilisatoren gegen thermische und/oder chemische Belastungen und/oder Belastungen durch ultraviolettes und sichtbares Licht, enthalten.

Als UV-Stabilisatoren können z. B. bekannte Produkte auf Basis gehinderter Phenolischer Systeme eingesetzt werden. Als Licht-Stabilisatoren können z. B. sogenannte HALS-Amine eingesetzt werden. Als Stabilisatoren können z. B. die dem Fachmann bekannten Produkte oder Produktkombinationen aus z.B. Tinuvin®-Stabilisatoren (Ciba), bevorzugt Tinuvin® 1130 in Kombination mit Tinuvin® 292 eingesetzt werden. Ihre Einsatzmenge richtet sich nach dem Grad der erforderlichen Stabilisierung.

Bevorzugte erfindungsgemäße Zusammensetzungen weisen zumindest ein Alkoxylierungsprodukt A, einen Weichmacher, ein Füllstoff, einen Haftvermittler, ein Trocknungsmittel und einen (Härtungs-)katalysator auf.

Besonders bevorzugte erfindungsgemäße Zusammensetzungen weisen von 10 bis 80 Gew.-% oder kleiner 80 Gew.-%, vorzugsweise von 21 bis 75 Gew.-%, bezogen auf die Gesamtzusammensetzung an zumindest einem Prepolymer (Alkoxylieungsprodukt A) auf, das im Mittel zwischen 2,0 und 8,0 Ethoxysilyl-Funktionen pro Prepolymeraufweist, von 0,3 Gew.-% bis 3,0 Gew.-%, bevorzugt von 0,5 Gew.-% bis 2,5 Gew.-%, und besonders bevorzugt von 0,70 Gew.-% bis 2,0 Gew.-% bezogen auf die Gesamtzusammensetzung an zumindest einem Haftvermittler, von weniger als 30 Gew.-%, vorzugsweise von 0,1 bis 25 Gew.-% bezogen auf die Gesamtzusammensetzung an mindestens einem Weichmacher, wobei besonders bevorzugt das Massenverhältnis von Alkoxylierungsprodukten A und Weichmachern weniger als das 1,1-fache des Anteils des Alkoxylierungsprodukts A beträgt, von 5 bis 65 Gew.-%, bezogen auf die Gesamtzusammensetzung an Füllstoffen, von 0,2 bis 3,0 Gew.-% bezogen auf die Gesamtzusammensetzung an mindestens einem Trocknungsmittel, insbesondere einem chemischen Feuchtigkeits-Trocknungsmittel und von 0,1 Gew.-% bis 5,00 Gew.-%, bevorzugt 0,15 bis 2,00 Gew.-% und insbesondere 0,2 bis 0,75 Gew.-% bezogen auf die Gesamtzusammensetzung an zumindest einem HärtungsKatalysator auf. Bei ganz besonders bevorzugten Zusammensetzungen sind die genannten Anteile der Formulierungsbestandteile so gewählt, dass sich die Gesamtsumme der Anteile auf 100 Gew.-% summiert.

Die erfindungsgemäßen Zusammensetzungen können z. B. Dicht- oder Klebstoff sein oder zur Herstellung eines Dicht- oder Klebstoffs verwendet werden.

Die erfindungsgemäße Zusammensetzung, insbesondere die so erhaltenen erfindungsgemäßen Zusammensetzung härtet in, zu bisher kommerziell verfügbaren und technisch eingesetzten Produkten vergleichbaren, Zeiträumen aus, und vernetzt, so sie in dickeren Schichten appliziert wurde, auch sehr gut in die Tiefe. Die Flankenhaftung und Anbindung an verschiedene Substrate, wie beispielsweise Stahl, Aluminium, verschiedene Kunststoffe und mineralische Untergründe wie beispielsweise Stein, Beton und Mörtel, ist gut.

Die erfindungsgemäße Zusammensetzung zeichnet sich insbesondere dadurch aus, dass bei deren feuchtigkeitsinduzierten Härtung das Gewichtsverhältnis zwischen freigesetztem Ethanol zu anderen Alkoholen, insbesondere Methanol größer 10 : 1, bevorzugt größer 20 : 1 und besonders bevorzugt von 50 : 1 bis 200 : 1 beträgt oder als Alkohol ausschließlich Ethanol freigesetzt wird.

Die erfindungsgemäßen Zusammensetzungen können insbesondere zur Verstärkung, Nivellierung, Modifikation, Verklebung, Abdichtung und/oder Beschichtung von Substraten verwendet werden. Geeignete Substrate sind z. B. partikuläre oder flächige Substrate, in der Bauindustrie oder im Fahrzeugbau, Konstruktionselemente, Bauteile, Metalle, insbesondere Konstruktionswerkstoffe wie Eisen, Stahl, Edelstahl und Gusseisen, keramische Materialien, insbesondere basierend auf festen Metall- oder Nichtmetalloxiden oder Carbiden, Aluminiumoxid, Magnesiumoxid oder Calciumoxid, mineralische oder organische Substrate, insbesondere Kork und/oder Holz, mineralische Untergründe, Span- und Faserplatten aus Holz oder Kork, Verbundwerkstoffe wie beispielsweise Holzverbundstoffe wie MDF-Platten (mitteldichte Faserplatten), WPC-Artikel (Wood Plastic Composites), Spanplatten, Korkartikel, laminierte Artikel, Keramiken, aber auch Naturfasern und Kunstfasern (aufweisende Substrate) oder Mischungen unterschiedlicher Substrate. Besonders bevorzugt werden die erfindungsgemäßen Zusammensetzungen zur Abdichtung und/oder Beschichtung von partikulären oder flächigen Substraten, in der Bauindustrie oder im Fahrzeugbau, zur Abdichtung und Verklebung von Konstruktionselementen und Bauteilen, sowie zur Beschichtung von porösen oder nicht-porösen, partikulären oder flächigen Substrat, zur Beschichtung und Modifikation von Oberflächen und zur Anwendungen auf Metallen, insbesondere auf Konstruktionswerkstoffe wie Eisen, Stahl, Edelstahl und Gusseisen, zur Anwendung auf keramischen Materialien, insbesondere basierend auf festen Metall- oder Nichtmetalloxiden oder Carbiden, Aluminiumoxid, Magnesiumoxid oder Calciumoxid, auf mineralischen Substrate oder organische Substraten, insbesondere auf Kork und/oder Holz, zur Bindung, Verstärkung und Nivellierung von unebenen, porösen oder brüchigen Substraten, wie z.B. mineralischen Untergründen, Span- und Faserplatten aus Holz oder Kork, Verbundwerkstoffe wie beispielsweise Holzverbundstoffe wie MDF-Platten (mitteldichte Faserplatten), WPC-Artikel (Wood Plastic Composites), Spanplatten, Korkartikel, laminierte Artikel, Keramiken, aber auch Naturfasern und Kunstfasern, oder Mischungen unterschiedlicher Substrate, verwendet.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Ausführungsbeispiele:

Im Folgenden werden erfindungsgemäße Beispiele für härtbare Zusammensetzungen, die bei der Härtung ausschließlich Ethanol abspalten, beschrieben.

### Herstellung der härtbaren Zusammensetzung:

Die Komponenten der Zusammensetzung (Alkoxylierungsprodukt, Weichmacher, Füllstoff und Rheologieadditiv wurden miteinander im Mischer (Speedmixer FVS 600, Hausschild) intensiv vermischt. Anschließend wurden die restlichen Komponenten zugegeben und intensiv vermischt. Zu beachten ist, dass nach der Zugabe des Haftvermittlers eine Temperatur von 65 °C nicht mehr überschritten wird. Die fertige Formulierung wurde auf Euro-Kartuschen überführt und vor der Applikation für minimal 24h bei Raumtemperatur gelagert.

### Lagertest:

Die in der Kartusche luftdicht verschlossenen Zusammensetzungen wurden bei einer Temperatur von 60 °C in einem Labortrockenschrank gelagert. Wenn das in der Kartusche enthaltene Material nach 2 Wochen noch gut, mittels einer handelsüblichen Skelett-Pistole, auch bekannt als Kartuschenpresse, für Dichtstoffe mit Handantrieb, aus der Kartusche auspressbar war, wurde die Lagerstabilität als gut beurteilt.

### Härtungskinetik:

Die Härtungsgeschwindigkeit wurde mit Hilfe eines aus einem Teflonblock gefertigten Keilrakels ermittelt. Der in den Block gefräste Keil wurde mit der härtbaren Zusammensetzung gefüllt und auf das Niveau der Blockkanten abgeglättet. Somit entstand eine Schichtdickenverteilung über die Blocklänge der härtbaren Zusammensetzung von 0 bis 10 mm. Der gefüllte Keil wurde bei 23 °C und 50 % relativer Luftfeuchte gelagert. Nach 24 Stunden wurde vom dünnen Ende des Keils beginnend die gehärtete Masse abgehoben und die Dicke der gehärteten Schicht bestimmt. Als gehärtet galt die Dicke, bei der noch ein direkter mechanischen Zusammenhalt mit der gehärteten Oberfläche bestand, ohne noch flüssige oder gallertartige Anteilen zu beinhalten.

### Analytik auf Methanol und Ethanol:

Ein Metallträger wurde mit 4 g der frischen, nicht ausgehärteten Zusammensetzung bestrichen und in einer 1L PE-Flasche so eingelegt, dass er schräg in der Flasche steht. Auf den Boden der Flasche wurden ca. 5 ml Wasser so eingebracht, dass ein direkter Kontakt zwischen Wasser und Zusammensetzung vermieden wurde. Die Flasche wurde verschlossen und für 48h bei 23°C aufbewahrt. Nach dieser Zeit wurden 2 Löcher in den Deckel gestanzt und die in der Flasche enthaltenen Bestandteile mit Hilfe von Stickstoff, dessen Volumen dem sechsfachen Flaschenvolumen entspricht, auf Silikagel enthaltende Adsorberröhrchen überführt. Die im Adsorberröhrchen eingefangenen Bestandteile wurden mittels Headspace Gaschromatographie untersucht. Kalibrierung, Probenahme und Analyse erfolgten dabei nach einer für Luftanalysen anerkannten Methode (DFG- Analytische Methoden zur Prüfung gesundheitsschädlicher Arbeitsstoffe, Methode Nr. 6, 11. Lieferung, 1997, Verlag Chemie (jetzt: Wiley-VCH)).

### Herstellung der Zugstäbe:

Die zu untersuchende Zusammensetzung wurde in einen Rakel mit einem Spaltmaß von 2mm eingebracht und auf eine Polyethylenfolie aufgerakelt. Nach dem Aushärten des aufgerakelten Felles, nach 7 Tagen bei 23°C und 50% relativer Luftfeuchte, wurden aus diesem mit Hilfe einer Schneidform und einer Kniehebelpresse Zugstäbe nach DIN 53504-S2 ausgestanzt.

### Prüfung der Zugstäbe:

Die Dicke der nach DIN 53504-S2 gefertigten Zugstäbe wurde vor Beginn der Prüfung bei jedem Stab gemessen, um die wirksame Querschnittsfläche zu berücksichtigen. Die Zugstäbe wurden in ein Rollenspannzeug an einer Universalprüfmaschine eingespannt und mit einer Zuggeschwindigkeit von 200 mm/min geprüft.

### Herstellung der Zugscherverklebungen:

Die Zusammensetzungen wurden direkt von der Kartusche aufgebracht. Verwendet wurden 2 Edelstahlsubstrate der Stahlsorte V2A, (1.4301 (Bezeichnung laut Stahlschlüssel)), und je 2 Aluminiumsubstrate (AIMgSi7), welche vorher durch Einweichen in frischem Ethanol für 24 h und anschließendem Abwischen mit saugfähigem Papier gereinigt und anschließend getrocknet wurden. Verwendet wurden Substrate mit einer Breite von 25 mm, einer Dicke von 2 mm und einer Länge von 100 mm. Die verklebte Fläche betrug in allen Fällen 500 mm².

### Prüfung der Zugscherverklebungen:

Die Zugscherverklebungen wurden nach der Aushärtung 10 Tage bei Normklima (23°C und 50% relative Luftfeuchte) in ein Backenspannzeug einer Universalprüfmaschine eingespannt und mit 10 mm/min bis zum Bruch gezogen. Notiert wird die an der Probe anliegende Spannung beim Bruch der Verklebung.

### Beispiel 1:

### Herstellung Alkoxylierungsprodukt 1:

In einem 5 Liter Autoklaven wurden 437 g Desmophen® 2061 BD (Bayer MaterialScience) vorgelegt und mit 100 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 130 °C erhitzt und auf ca. 20 mbar evakuiert, um leichtflüchtige Komponenten zu entfernen. Nach 30 min wurden zur Aktivierung des Katalysators 60 g Propylenoxid in den evakuierten Reaktor dosiert. Der Innendruck stieg zunächst auf ca. 0,6 bar an. Nach ca. 15 min sprang die Reaktion an, was sich durch einen Abfall im Reaktordruck bemerkbar machte. Nun wurden innerhalb von einer halben Stunde kontinuierlich 790 g Propylenoxid zudosiert. Es schloß sich eine einstündige Nachreaktion an, während derer die Temperatur auf 85°C abgesenkt wurde. Bei dieser Temperatur wurde bei maximaler Kühlleistung ein Gemisch aus 238 g 3-Glycidyloxypropyltriethoxysilan (Dynasylan® GLYEO®, Firma Evonik Degussa GmbH) und 1476 g Propylenoxid kontinuierlich so zudosiert, dass die Temperatur konstant blieb. Nach einer erneuten einstündigen Nachreaktion wurde durch Anlegen eines Vakuums (Druck < 100 mbar) desodoriert, um Reste an nicht umgesetztem Alkylenoxid zu entfernen und 500 ppm Irganox® 1135 (Firma BASF) wurden als Antioxidanz für 15 Minuten eingerührt. Man erhielt ein farbloses, hochviskoses Produkt mit einer Viskosität von 7 - 9 Pa ·*s bei 25°C (Rheometer MCR 301, Anton Paar) und einer Scherrate von 10 1/s. Das entstandene Produkt wurde mit 0,1 Gew.-% eines Wismut-Katalysators (TIB® KAT 720, TIB Chemicals) versetzt und auf 70 °C aufgeheizt. Nach Erreichen der Temperatur wurde 0,7 Gew.-% n-Butylisocyanat, bezogen auf das Produkt der vorgenannten Alkoxylierung, zugegeben und die Reaktionsmischung für weitere 4 Stunden intensiv gemischt und anschließend abgekühlt.

**Tabelle 1:**

| Formulierung 1.1 | |
|---|---|
| **Bestandteil** | **Masseanteil** |
| Alkoxylierungsprodukt gemäß Beispiel 1 | 22,2 Gew.-% |
| Diisoundecylenphthalat (Weichmacher) | 21,0 Gew.-% |
| Socal® U1S2 (Füllstoff) | 49,5 Gew.-% |
| Vinyltriethoxysilan (Dynasylan® VTEO, EVONIK®) | 1,0 Gew.-% |
| Ethoxy-funktionelles Aminosilan [Dynasylan® AMEO] (Haftvermittler) | 1,5 Gew.-% |
| Amidwachs [Crayvallac® SLX] (Rheologieadditiv) | 3,5 Gew.-% |
| Tinuvin® 292 (Stabilisator) | 0,5 Gew.-% |
| Tinuvin® 1130 (Stabilisator) | 0,5 Gew.-% |
| Dioctyl-Zinn-Diketonat [TIB® KAT 223] (Katalysator) | 0,3 Gew.-% |

**Tabelle 2:**

| Formulierung 1.2 | |
|---|---|
| **Bestandteil** | **Masseanteil** |
| Alkoxylierungsprodukt gemäß Beispiel 1 | 22,2 Gew.-% |
| Diisononylphthalat DINP (Weichmacher) | 21,0 Gew.-% |
| Silbond® 800 AST(Füllstoff) | 49,5 Gew.-% |
| Vinyltriethoxysilan (Dynasylan® VTEO, EVONIK®) | 1,0 Gew.-% |
| Ethoxy-funktionelles Aminosilan [Dynasylan® AMEO] (Haftvermittler) | 1,2 Gew.-% |
| Amidwachs [Crayvallac® SLX] (Rheologieadditiv) | 4,0 Gew.-% |
| Tinuvin® 292 (Stabilisator) | 0,75 Gew.-% |
| Tinuvin® 1130 (Stabilisator) | 0,75 Gew.-% |
| Dioctyl-Zinn-Diketonat [TIB® KAT 223] (Katalysator) | 0,4 Gew.-% |

### Beispiel 2:

### Herstellung Alkyoxylierungsprodukt 2:

In einem 5 Liter Autoklaven wurden 102 g Acclaim® 8200 (Bayer Material Science) vorgelegt und mit 150 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 130 °C erhitzt und auf ca. 20 mbar evakuiert, um leichtflüchtige Komponenten zu entfernen. Nach 30 min wurden zur Aktivierung des Katalysators 60 g Propylenoxid in den evakuierten Reaktor dosiert. Der Innendruck stieg zunächst auf ca. 0,6 bar an. Nach ca. 15 min sprang die Reaktion an, was sich durch einen Abfall im Reaktordruck bemerkbar machte. Nun wurden innerhalb von einer halben Stunde kontinuierlich 835 g Propylenoxid zudosiert. Es schloß sich eine einstündige Nachreaktion an, während derer die Temperatur auf 85°C abgesenkt wurde. Bei dieser Temperatur wurde ein Gemisch aus 142 g 3-Glycidyloxypropyltriethoxysilan (Dynasylan® GLYEO, (Firma Evonik) und 1008 g Propylenoxid kontinuierlich so zudosiert, dass die Temperatur konstant blieb. Nach einer erneuten einstündigen Nachreaktion wird durch Anlagen eines Vakuums (Druck < 100 mbar) desodoriert, um Reste an nicht umgesetztem Alkylenoxid zu entfernen und 500 ppm Irganox® 1135 (Firma BASF) wurden als Antioxidanz für 15 Minuten eingerührt. Man erhielt ein farbloses, hochviskoses Produkt mit einer Viskosität von 16 - 19 Pa * s bei 25°C Rheometer MCR 301, Anton Paar) und einer Scherrate von 10 1/s. Das entstandene Alkoxylierungsprodukt wurde mit 0,1 Gew.-% eines Wismut-Katalysators (TIB® KAT 720, TIB Chemicals) versetzt und auf 70°C aufgeheizt. Nach Erreichen der Temperatur wurde 0,7 Gew.-% n-Butylisocyanat bezogen auf das vorgenannte Alkoxylierungsprodukt zugegeben und die Reaktionsmischung für weitere 4 Stunden intensiv gemischt und anschließend abgekühlt.

**Tabelle 3:**

| Formulierung 2.1: | |
|---|---|
| **Komponente** | **Masseanteil** |
| Alkoxylierungsprodukt gemäß Beispiel 2 | 22,2 Gew.-% |
| Diisoundecylenphthalat (Weichmacher) | 21,0 Gew.-% |
| Socal® U1S2 (Füllstoff) | 49,5 Gew.-% |
| Vinyltriethoxysilan (Dynasylan® VTEO, EVONIK®) | 1,0 Gew.-% |
| Ethoxy-funktionelles Aminosilan [Dynasylan® AMEO] (Haftvermittler) | 1,5 Gew.-% |
| Amidwachs [Crayvallac® SLX] (Rheologieadditiv) | 3,5 Gew.-% |
| Tinuvin® 292 (Stabilisator) | 0,5 Gew.-% |
| Tinuvin® 1130 (Stabilisator) | 0,5 Gew.-% |
| Dioctyl-Zinn-Diketonat [TIB® KAT 223] (Katalysator) | 0,3 Gew.-% |

**Tabelle 4:**

| Formulierung 2.2: | |
|---|---|
| **Komponente** | **Masseanteil** |
| Alkoxylierungsprodukt gemäß Beispiel 2 | 22,2 Gew.-% |
| Diisononylphthalat (Weichmacher) | 21,0 Gew.-% |
| Silbond® 800 AST(Füllstoff) | 49,5 Gew.-% |
| Vinyltriethoxysilan (Dynasylan® VTEO, EVONIK®) | 1,0 Gew.-% |
| Ethoxy-funktionelles Aminosilan [Dynasylan® AMEO] (Haftvermittler) | 1,5 Gew.-% |
| Amidwachs [Crayvallac® SLX] (Rheologieadditiv) | 3,5 Gew.-% |
| Tinuvin® 292 (Stabilisator) | 0,5 Gew.-% |
| Tinuvin® 1130 (Stabilisator) | 0,5 Gew.-% |
| Dioctyl-Zinn-Diketonat [TIB® KAT 223] (Katalysator) | 0,3 Gew.-% |

**Tabelle 5:**

| Formulierung 2.3 : | |
|---|---|
| **Komponente** | **Masseanteil** |
| Alkoxylierungsprodukt gemäß Beispiel 2 | 65,0 Gew.-% |
| Diisoundecylenphthalat (Weichmacher) | 22,4 Gew.-% |
| Pyrogene Kieselsäure (Aerosil® R805, EVONIK, Füllstoff und Rheologieadditiv) | 8,0 Gew.-% |
| Vinyltriethoxysilan (Dynasylan® VTEO, EVONIK®) | 2,0 Gew.-% |
| Ethoxy-funktionelles Aminosilan [Dynasylan® AMEO] (Haftvermittler) | 1,7 Gew.-% |
| Tinuvin® 292 + Tinuvin® 1130 (Verhältnis 1:1) (Stabilisatoren) | 0,5 Gew.-% |
| Dioctyl-Zinn-Diketonat [TIB® KAT 223] (Katalysator) | 0,4 Gew.-% |

### Vergleichsbeispiel 1:

Zum Vergleich wurde eine Zusammensetzung aus den Komponenten gemäß Tabelle 6 formuliert.

**Tabelle 6:**

| Vergleichsformulierung 1 (Vergleich kommerzielles Produkt): | |
|---|---|
| **Komponente** | **Masseanteil** |
| Kaneka MS® Polymer S203H/S303H (60/40) | 24,4 Gew.-% |
| Diisononylphthalat DINP (Weichmacher) | 14,0 Gew.-% |
| Socal® U1S2 (Füllstoff) | 55,0 Gew.-% |
| Vinyltriethoxysilan (Dynasylan® VTEO, EVONIK®) | 1,0 Gew.-% |
| Ethoxy-funktionelles Aminosilan [Dynasylan® AMEO] (Haftvermittler) | 1,7 Gew.-% |
| Pyrogene Kieselsäure (Aerosil® R202 (EVONIK, Rheologieadditiv) | 3,0 Gew.-% |
| Tinuvin® 292 (Stabilisator) | 0,25 Gew.-% |
| Tinuvin® 1130 (Stabilisator) | 0,25 Gew.-% |
| Dioctyl-Zinn-Diketonat [TIB® KAT 223] (Katalysator) | 0,4 Gew.-% |

### Vergleichsbeispiel 2:

Zum Vergleich mit der zur Zeit üblichen Formulierungsart wurde die unter Vergleichsbeispiel 1 aufgeführte Zusammensetzung mit einem ebenfalls Methanol-abspaltenden Polymer, dem Desmoseal® S XP 2636 (Bayer) und den weitverbreiteten Methanol-abspaltenden Bestandteilen Dynasylan® AMMO (Methoxy-funktionelles Aminosilan, EVONIK), statt des Ethoxy-funktionellem Aminosilan und Dynasylan® VTMO (Methoxy-funktionelles Trocknungsmittel) statt Dynasylan® VTEO formuliert. Die Anteile an der Formulierung blieben unverändert.

Die folgende Tabelle 7 listet die, durch das oben beschriebene Verfahren bestimmten freigesetzten Alkohole auf.

**Tabelle 7:**

| Aufstellung der bei der Aushärtung innerhalb von 48h in die Testatmosphäre freigesetzten Alkohole | | | | | | | |
|---|---|---|---|---|---|---|---|
| | Beispiel 1.1 | Beispiel 1.2 | Beispiel 2.1 | Beispiel 2.2 | Beispiel 2.3 | Verg.l- Bsp. 1 | Vergl. - Bsp.2 |
| Methanol [mg] | <0,02 | <0,02 | <0,02 | < 0,02 | < 0,02 | 0,84 | 5,61 |
| Ethanol [mg] | 8,0 | 8,0 | 4,8 | 6,8 | 10,5 | 7,5 | < 0,02 |

Wie in Tabelle 7 dargestellt, findet sich bei der Aushärtung der erfindungsgemäßen Formulierungen keine signifikante Freisetzung an Methanol (< 0,02 mg) in die Testatmosphäre. Lediglich Ethanol wird in signifikanten Mengen gefunden. Im Vergleichsbeispiel 1 hingegen finden sich erhöhte Methanolmengen, minimal das 42-fache verglichen mit den erfindungsgemäßen Rezepturen. Zur Darstellung einer Formulierung mit ausschließlich Methoxysilan funktionalisierten Polymer, Trocknungsmittel und Haftvermittler wird Vergleichsbeispiel 2 herangezogen. Hier zeigt sich deutlich eine im Gegensatz zu den erfindungsgemäßen Beispielen erhöhte Menge Methanol.

Bei einem Vergleich der Aushärtetiefe nach 24 h wurde überraschenderweise festgestellt, dass sich bei den einander ähnlichen Formulierungen 1.2 und Vergleichsbeispiel 1 die erreichte Härtungstiefe lediglich um wenige Bruchteile eines Millimeters unterscheidet. Für die erfindungsgemäße Formulierung 1.2 wurde eine Härtungstiefe von 3,5 mm nach 24h gemessen, in der gleichen Zeit wurde im Vergleichsbeispiel 1 eine Tiefe von 3,8 mm erreicht. Die Formulierungen 1.1 und 2.2 erreichen sogar eine Tiefe von 3,8 bis 4,0 mm in 24h. Diese sind aber aufgrund des gegenüber der Vergleichsrezeptur veränderten Polymer- und Weichmacheranteils nur eingeschränkt vergleichbar.

**Tabelle 8:**

| Mechanische Kennwerte der in den Ausführungs- und Vergleichsbeispielen gezeigten Formulierungen nach ihrer Aushärtung im Normklima (T: 23°C, 50% RLF): | | | | | | | |
|---|---|---|---|---|---|---|---|
| | | Beispiel 1.1 | Beispiel 1.2 | Beispiel 2.1 | Beispiel 2.2 | Beispiel 2.3 | Vergl.-Bsp. 1 |
| Zugstab | Bruchspannung [MPa] | 0,63 | 1,29 | 0,20 | 0,59 | 0,14 | 1,68 |
| | Bruchdehnung [%] | 67 | 43 | 120 | 78 | 78 | 177 |
| Verklebungen V2A-Stahl | Bruchspannung [MPa] | 1,83 | 1,76 | 0,51 | 0,51 | 0,27 | 2,04 |
| | Bruchbild | KB | KB | KB | AB | AB | KBO |
| Verklebungen Aluminium | Bruchspannung [MPa] | 1,64 | 1,33 | 0,37 | 0,26 | 0,32 | 1,22 |
| | Bruchbild | KB | MB | MB | AB | AB | AB |

(Bezeichnung der Bruchbilder: KB = Kohäsionsbruch, AB = Adhäsionsbruch, KBO = Kohäsionsbruch oberflächennah, MB = Adhäsion/Kohäsion Mischbruch).

Wie in Tabelle 8 gezeigt, verfügen die erfindungsgemäßen Zusammensetzungen über ein gutes Haftungsvermögen und über ein für eine Vielzahl von Anwendungen geeignetes Spannungs- und Dehnungsverhalten.

## Patentansprüche

1. Härtbare Zusammensetzung enthaltend zumindest ein nicht-ausschließlich terminal alkoxysilyliertes Alkoxylierungsprodukt, zumindest einen Härtungskatalysator, **dadurch gekennzeichnet, dass** das nicht-ausschließlich terminal alkoxysilylierte Alkoxylierungsprodukt ein Prepolymer ist, das als Alkoxysilylgruppen ausschließlich Ethoxysilygruppen aufweist und das im Mittel zwischen 2,0 und 8,0 Ethoxysilyl-Funktionen pro Prepolymer aufweist, wobei bei einer feuchtigkeitsinduzierten Härtung das Gewichtsverhältnis zwischen freigesetztem Ethanol zu anderen Alkoholen, insbesondere Methanol größer 10 : 1 beträgt oder als Alkohol ausschließlich Ethanol freigesetzt wird, **dadurch gekennzeichnet, dass** die Zusammensetzung einen oder mehrere Haftvermittler und/oder einen oder mehrere chemische Feuchtigkeits-Trocknungsmittel enthält, wobei sie als Haftvermittler 3-Aminopropyltriethoxysilan und/oder (3-Aminopropy)methyldiethoxysilan und/oder als chemisches Feuchtigkeits-Trocknungsmittel Vinyltriethoxysilan enthält.

2. Zusammensetzung gemäß Anspruch 1, **dadurch gekennzeichnet, dass** alle Ethoxysilylgruppen Triethoxysilylgruppen sind.

3. Zusammensetzung gemäß einem der Ansprüche 1 bis 2, **dadurch gekennzeichnet, dass** das nicht-ausschließlich terminal alkoxysilylierte Alkoxylierungsprodukt ein Prepolymer der allgemeinen Formel (III) ist 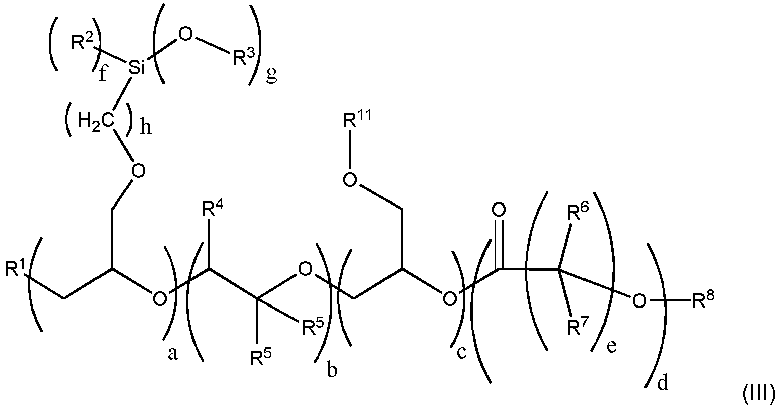 mit
R¹ = einem 1- bis 6-fach funktionellen gesättigten oder ungesättigten, linearen oder verzweigten organischen Rest vom Typ einer Alkoxy-, Arylalkoxy- oder Alkylarylalkoxygruppe, bei der die Kohlenstoffkette durch Sauerstoffatome unterbrochen sein kann und auch seitenständige Alkoxysilylgruppen enthaltende Substituenten tragen kann oder direkt mit Alkoxysilylgruppen substituiert ist, ausgewählt aus der Gruppe der Polyoxyalkylenreste, Polyetherreste, ein Polyetheralkoxyrest
oder einer einfach oder mehrfach annelierten phenolischen Gruppe entspricht, oder von einem einfach oder mehrfach hydroxyliertem Alkohol, Polyetherol, Polyesterol, Siloxan, perfluorierten Polyetherol, (poly)-Urethan oder Zucker abgeleitet sein kann,
R² = eine Alkylgruppe mit 1 bis 2 Kohlenstoffatomen,
R³ = eine Alkylgruppe mit 2 Kohlenstoffatomen,
R⁴ = unabhängig voneinander ein Wasserstoffradikal oder eine Alkylgruppe mit 1 bis 8 Kohlenstoffatomen,
R⁵ = unabhängig voneinander ein Wasserstoffradikal, eine Alkylgruppe mit 1 bis 20 Kohlenstoffatomen, eine Aryl- oder Alkarylgruppe,
R⁶ und R⁷ = unabhängig voneinander gleich R⁵,
R⁸ = ein Trialkylsilyl-Endblock oder ein Urethan-Endblock oder Esterendblock, der aus der Reaktion einer endständigen Alkoholfunktion mit hydroxylgruppenreaktiven Verbindungen enthaltend den Rest R⁸ hervorgegangen ist, insbesondere eine Endgruppe der Formel (IV) 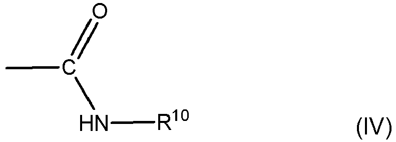 wobei
R¹⁰ = unabhängig voneinander eine lineare oder verzweigte, gesättigte oder ungesättigte, ggf. weiter substituierte Alkylgruppe mit 1 bis 30 Kohlenstoffatomen, eine Aryl- oder Alkarylgruppe oder eine Gruppe -A(T)ₓ ist, mit A = Kohlenwasserstoffrest, der ggf. mit Halogenatomen substituiert sein kann, x = 1 bis 4, und T gleich oder verschieden -N=C=O, -NH-C(O)-X, mit X = O-R¹² oder NH-R¹², wobei R¹² gleich oder verschieden Kohlenwasserstoffrest, der mit Heteroatomen unterbrochen sein kann, oder X ein Rest der Formel lila 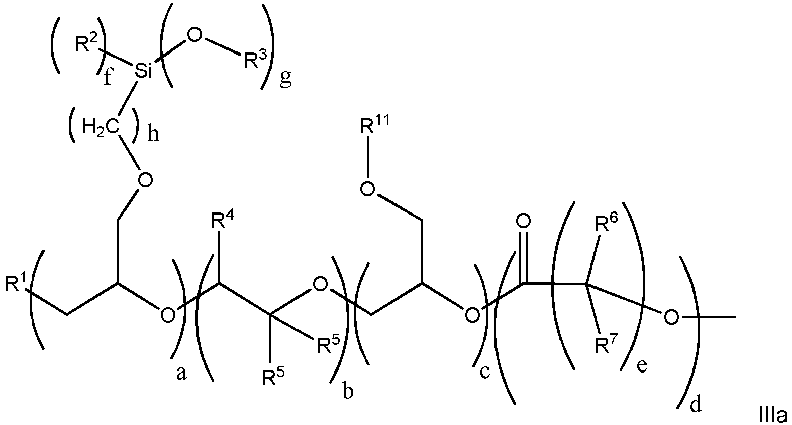
a = 0 bis 1000 ist, mit der Maßgabe, dass a größer oder gleich 2 sein muss, wenn R¹ keine Substituenten mit Alkoxysilylgruppen trägt oder selbst nicht direkt mit Alkoxysilylgruppen substituiert ist,
b = 0 bis 1000,
c = unabhängig voneinander gleich b,
d = unabhängig voneinander gleich b,
und die Summe der Fragmente mit den Indizes a, b, c und d mindestens 3 ist,
mit der Maßgabe, dass die Gruppen mit den Indices a, b, c und d frei permutierbar über die Molekülkette sind, aber mindestens mehr als eine Gruppe mit dem Index a nicht terminal in der Polymerkette angeordnet ist,
e = 1 bis 10,
g + f = 3 und g mindestens gleich 2 ist,
h = 2, 3, 4 und mit der Maßgabe, dass
die verschiedenen Monomereinheiten sowohl der Fragmente mit den Indices a, b, c, und d als auch der Polyoxyalkylenkette des Substituenten R¹ untereinander blockweise aufgebaut sein können oder aber einer statistischen Verteilung unterliegen und zudem untereinander frei permutierbar sind.

4. Zusammensetzung nach Anspruch 3, **dadurch gekennzeichnet, dass** die Zusammensetzung ausschließlich Prepolymere der Formel (III) mit R⁸ wie in Anspruch 4 definiert und keine Prepolymere der Formel (III) aufweist, bei denen R⁸ gleich Wasserstoff ist.

5. Zusammensetzung nach Anspruch 3, **dadurch gekennzeichnet, dass** die Zusammensetzung neben Prepolymeren der Formel (III) mit R⁸ wie in Anspruch 4 definiert auch solche Prepolymeren der Formel (III) aufweist, bei denen R⁸ gleich Wasserstoff ist.

6. Zusammensetzung nach Anspruch 5, **dadurch gekennzeichnet, dass** das Massenverhältnis von Prepolymeren der Formel (III) mit R⁸ wie in Anspruch 4 definiert zu Prepolymeren der Formel (III), bei denen R⁸ gleich Wasserstoff ist, von 100:>0 bis 10:90 beträgt.

7. Zusammensetzung nach zumindest einem der Ansprüche 1 bis 6, **dadurch gekennzeichnet, dass** die Zusammensetzung einen oder mehrere Zusatzstoffe ausgewählt aus der Gruppe der Weichmacher, Füllstoffe, Lösungsmittel und Additive zur Anpassung des Fließverhaltens enthält.

8. Zusammensetzung gemäß zumindest einem der Ansprüche 1 bis 7, **dadurch gekennzeichnet, dass** sie eine oder mehrere Substanzen, ausgewählt aus der Gruppe umfassend Co-Vernetzer, Flammschutzmittel, Entlüfter, antimikrobielle und konservierende Stoffe, Farbstoffe, Färbemittel und Pigmente, Frostschutzmittel, Fungizide und/oder Reaktivverdünner sowie Komplexbildner, Sprühhilfsmittel, Netzmittel, Duftstoffe, Lichtschutzmittel, Radikalfänger, UV-Absorber und Stabilisatoren enthält.

9. Zusammensetzung gemäß zumindest einem der Ansprüche 1 bis 8, **dadurch gekennzeichnet, dass** die Zusammensetzung ein Dicht- oder Klebstoff ist oder zur Herstellung eines Dicht- oder Klebstoffs verwendet wird.

10. Zusammensetzung gemäß zumindest einem der Ansprüche 1 bis 9, **dadurch gekennzeichnet, dass** die Zusammensetzung 10 bis kleiner 80 Gew.-% bezogen auf die Gesamtzusammensetzung an Prepolymer aufweist, das im Mittel zwischen 2,0 und 8,0, Ethoxysilyl-Funktionen pro Prepolymer aufweist.

11. Zusammensetzung nach einem der Ansprüche 1 bis 10, **dadurch gekennzeichnet, dass** die Zusammensetzung von 10 bis 80 Gew.-% bezogen auf die Gesamtzusammensetzung an Prepolymer, das im Mittel zwischen 2,0 und 8,0, Ethoxysilyl-Funktionen pro Prepolymer aufweist, Haftvermittler mit einem Anteil von 0,3 Gew.-% bis 3,0 Gew.-%, Weichmacher mit einem Anteil von weniger als 30 Gew.-%, wobei besonders bevorzugt das Massenverhältnis von härtbarem Alkoxylierungsprodukt und Weichmacher weniger als das 1,1fache des Alkoxylierungsprodukts beträgt, Füllstoffe mit einem Anteil von 18 bis 65 Gew.-%, chemische Feuchtigkeits-Trocknungsmittel mit einem Anteil von 0,2 bis 3,0 Gew.-% und Härtungskatalysatoren mit einem Anteil von 0,1 bis 5,00 Gew.-%, jeweils bezogen auf die Gesamtzusammensetzung, aufweist.

12. Verwendung von härtbaren Zusammensetzungen gemäß zumindest einem der Ansprüche 1 bis 11 zur Verstärkung, Nivellierung, Modifikation, Verklebung, Abdichtung und/oder Beschichtung von Substraten.

## Claims

1. Curable composition comprising at least one nonexclusively terminally alkoxysilylated alkoxylation product, at least one curing catalyst, **characterized in that** the nonexclusively terminally alkoxysilylated alkoxylation product is a prepolymer having exclusively ethoxysilyl groups as the alkoxysilyl group and having an average of between 2.0 and 8.0 ethoxysilyl functions per prepolymer wherein, in the course of moisture-induced curing, the weight ratio between ethanol released and other alcohols, especially methanol, is greater than 10:1, or the alcohol released is exclusively ethanol, **characterized in that** the composition comprises one or more adhesion promoters and/or one or more chemical moisture drying agents, wherein it comprises, as an adhesion promoter, 3-aminopropyltriethoxysilane and/or (3-aminopropyl)methyldiethoxysilane and/or as a chemical moisture drying agent, vinyltriethoxysilane.

2. Composition according to Claim 1, **characterized in that** all ethoxysilyl groups are triethoxysilyl groups.

3. Composition according to any of Claims 1 to 2, **characterized in that** the nonexclusively terminally alkoxysilylated alkoxylation product is a prepolymer of the general formula (III) 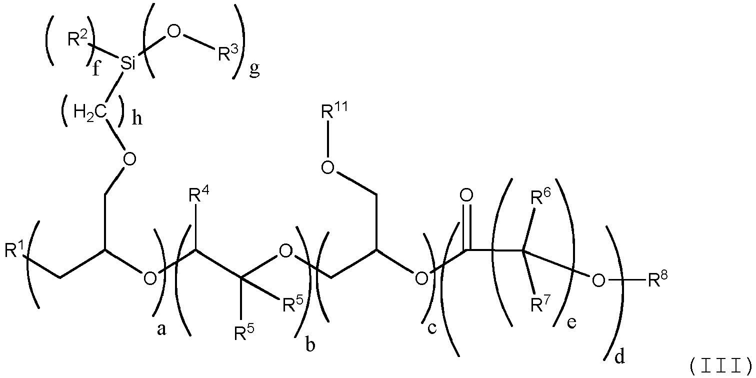 where
R¹ = a mono- to hexafunctional saturated or unsaturated, linear or branched organic radical of the alkoxy, arylalkoxy or alkylarylalkoxy group type, in which the carbon chain may be interrupted by oxygen atoms and may also bear pendant substituents containing alkoxysilyl groups or is substituted directly by alkoxysilyl groups, selected from the group of the polyoxyalkylene radicals, polyether radicals, a polyetheralkoxy radical
or is a singly or multiply fused phenolic group, or may be derived from a mono- or polyhydroxylated alcohol, polyetherol, polyesterol, siloxane, perfluorinated polyetherol, (poly)urethane or sugar,
R² = an alkyl group having 1 to 2 carbon atoms,
R³ = an alkyl group having 2 carbon atoms,
R⁴ = independently a hydrogen radical or an alkyl group having 1 to 8 carbon atoms,
R⁵ = independently a hydrogen radical, an alkyl group having 1 to 20 carbon atoms, an aryl or alkaryl group,
R⁶ and R⁷ = independently as R⁵,
R⁸ = a trialkylsilyl end block or a urethane end block or ester end block which has originated from the reaction of a terminal alcohol function with hydroxyl-reactive compounds containing the R⁸ radical, especially an end group of the formula (IV) 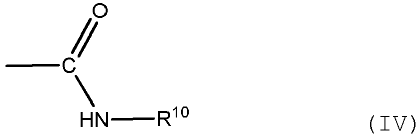 where
R¹⁰ = independently a linear or branched, saturated or unsaturated, optionally further-substituted alkyl group having 1 to 30 carbon atoms, an aryl or alkaryl group or an -A(T)ₓ group where A = hydrocarbyl radical which may optionally be substituted by halogen atoms, x = 1 to 4, and T is the same or different and is -N=C=O, -NH-C(O)-X, where X = O-R¹² or NH-R¹², where R¹² is the same or different and is a hydrocarbyl radical which may be interrupted by heteroatoms, or X is a radical of the formula (IIIa) 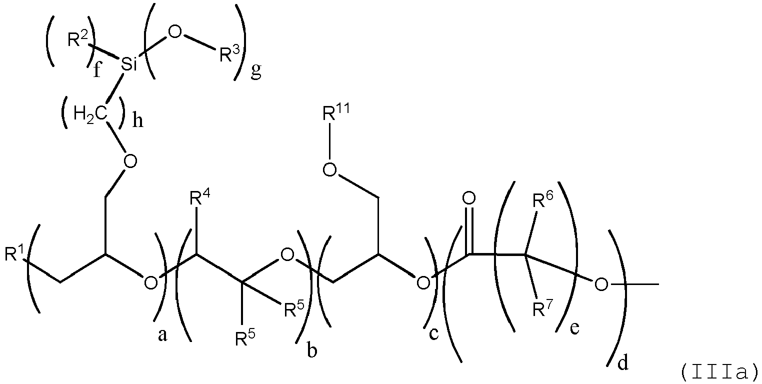
a = 0 to 1000, with the proviso that a must be greater than or equal to 2 when R¹ does not bear any substituents with alkoxysilyl groups or is not itself directly substituted by alkoxysilyl groups,
b = 0 to 1000,
c = independently as b,
d = independently as b,
and the sum of the fragments with the indices a, b, c and d is at least 3,
with the proviso that the groups with the indices a, b, c and d are freely permutable over the molecule chain, but at least more than one group with the index a is not arranged terminally in the polymer chain,
e = 1 to 10,
g + f = 3 and g is at least equal to 2,
h = 2, 3, 4, and with the proviso that
the different monomer units both of the fragments with the indices a, b, c, and d and of the polyoxyalkylene chain of the R¹ substituent may be in blockwise structure with one another, or else may be subject to a random distribution, and are additionally freely permutable with one another.

4. Composition according to Claim 3, **characterized in that** the composition comprises exclusively prepolymers of the formula (III) where R⁸ is as defined in Claim 4 and no prepolymers of the formula (III) in which R⁸ is hydrogen.

5. Composition according to Claim 3, **characterized in that** the composition, as well as prepolymers of the formula (III) where R⁸ is as defined in Claim 4, also comprises those prepolymers of the formula (III) in which R⁸ is hydrogen.

6. Composition according to Claim 5, **characterized in that** the mass ratio of prepolymers of the formula (III) where R⁸ is as defined in Claim 4 to prepolymers of the formula (III) in which R⁸ is hydrogen is from 100:>0 to 10:90.

7. Composition according to at least one of Claims 1 to 6, **characterized in that** the composition comprises one or more additives selected from the group of the plasticizers, fillers, solvents and additives for adjusting the flow characteristics.

8. Composition according to at least one of Claims 1 to 7, **characterized in that** it comprises one or more substances selected from the group comprising co-crosslinkers, flame retardants, deaerators, antimicrobial and preservative substances, dyes, colorants and pigments, antifreezes, fungicides and/or reactive diluents, and complexing agents, spraying aids, wetting agents, fragrances, light stabilizers, free-radical scavengers, UV absorbers and stabilizers.

9. Composition according to at least one of Claims 1 to 8, **characterized in that** the composition is a sealant or adhesive or is used for production of a sealant or adhesive.

10. Composition according to at least one of Claims 1 to 9, **characterized in that** the composition comprises 10 to less than 80% by weight, based on the overall composition of prepolymer having an average of between 2.0 and 8.0 ethoxysilyl functions per prepolymer.

11. Composition according to any of Claims 1 to 10, **characterized in that** the composition comprises from 10 to 80% by weight, based on the overall composition of prepolymer having an average of between 2.0 and 8.0 ethoxysilyl functions per prepolymer, of adhesion promoter with a proportion of 0.3% by weight to 3.0% by weight, plasticizer with a proportion of less than 30% by weight, the mass ratio of curable alkoxylation product and plasticizer more preferably being less than 1.1 times the alkoxylation product, fillers with a proportion of 18 to 65% by weight, chemical moisture drying agents with a proportion of 0.2 to 3.0% by weight, and curing catalysts with a proportion of 0.1 to 5.00% by weight, based in each case on the overall composition.

12. Use of curable compositions according to at least one of Claims 1 to 11 for reinforcement, levelling, modification, adhesive bonding, sealing and/or coating of substrates.

## Revendications

1. Composition durcissable contenant au moins un produit d'alcoxylation alcoxysilylé non exclusivement en position terminale, au moins un catalyseur de durcissement, **caractérisée en ce que** le produit d'alcoxylation alcoxysilylé non exclusivement en position terminale est un prépolymère qui présente, comme groupes alcoxysilylé, exclusivement des groupes éthoxysilyle et qui présente en moyenne entre 2,0 et 8,0 fonctions éthoxysilyle par prépolymère, le rapport pondéral entre l'éthanol libéré aux autres alcools, en particulier le méthanol, lors d'un durcissement induit par de l'humidité, étant supérieur à 10:1 ou seul de l'éthanol étant libéré comme alcool, **caractérisée en ce que** la composition contient un ou plusieurs promoteurs d'adhérence et/ou un ou plusieurs agents de dessiccation chimique de l'humidité, la composition contenant, comme promoteur d'adhérence, du 3-aminopropyltriéthoxysilane et/ou du (3-aminopropyl)méthyldiéthoxysilane et/ou, comme agent de dessiccation chimique de l'humidité, du vinyltriéthoxysilane.

2. Composition selon la revendication 1, **caractérisée en ce que** tous les groupes éthoxysilyle sont des groupes triéthoxysilyle.

3. Composition selon l'une quelconque des revendications 1 à 2, **caractérisée en ce que** le produit d'alcoxylation alcoxysilylé non exclusivement en position terminale est un prépolymère de formule générale (III) 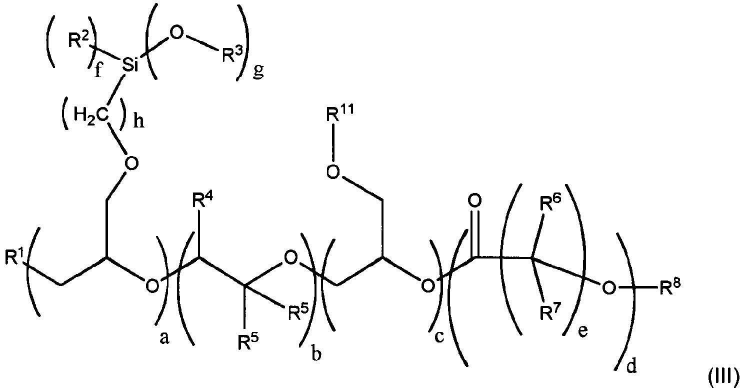 dans laquelle
R¹ = un radical organique monofonctionnel à hexafonctionnel, saturé ou insaturé, linéaire ou ramifié du type d'un groupe alcoxy, arylalcoxy ou alkylarylalcoxy, dans lequel la chaîne carbonée peut être interrompue par des atomes d'oxygène et peut également porter des substituants en position latérale, contenant des groupes alcoxysilyle ou est substituée directement par des groupes alcoxysilyle, choisis dans le groupe formé par les radicaux polyoxyalkylène, les radicaux polyéther, un radical polyétheralcoxy,
ou correspond à un groupe phénolique monocondensé ou polycondensé,
ou peut être dérivé d'un alcool monohydroxylé ou polyhydroxylé, d'un polyétherol, d'un polyesterol, d'un siloxane, d'un polyétherol perfluoré, d'un (poly)uréthane ou d'un sucre,
R² = un groupe alkyle comprenant 1 à 2 atomes de carbone,
R³ = un groupe alkyle comprenant 2 atomes de carbone,
R⁴ = indépendamment les uns des autres, un radical hydrogène ou un groupe alkyle comprenant 1 à 8 atomes de carbone,
R⁵ = indépendamment les uns des autres, un radical hydrogène, un groupe alkyle comprenant 1 à 20 atomes de carbone, un groupe aryle ou un groupe alkaryle,
R⁶ et R⁷ = indépendamment l'un de l'autre, R⁵,
R⁸ = un bloc terminal trialkylsilyle ou un bloc terminal uréthane ou un bloc terminal ester, qui provient de la réaction d'une fonction alcool en position terminale avec des composés réactifs avec des groupes hydroxyle, contenant le radical R⁸, en particulier un groupe terminal de formule (IV) 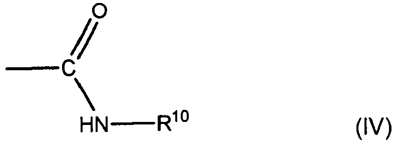
dans laquelle
R¹⁰ = représente, indépendamment, un groupe alkyle linéaire ou ramifié, saturé ou insaturé, le cas échéant substitué davantage, comprenant 1 à 30 atomes de carbone, un groupe aryle ou alkaryle ou un groupe -A(T)ₓ, dans lequel A = un radical hydrocarboné, qui peut le cas échéant être substitué par des atomes d'halogène, x = 1 à 4 et les radicaux T sont identiques ou différents et représentent-N=C=O, -NH-C (O) -X, où X = O-R¹² ou NH-R¹², les radicaux R¹² étant identiques ou différents et représentant un radical hydrocarboné qui peut être interrompu par des hétéroatomes, ou X représente un radical de formule IIIa 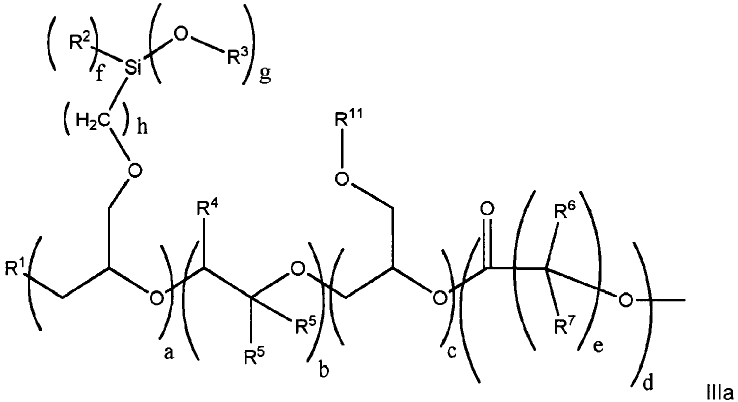
a = 0 à 1000, étant entendu que a doit être supérieur ou égal à 2 lorsque R¹ ne porte pas de substituants présentant des groupes alcoxysilyle ou n'est pas substitué lui-même directement par des groupes alcoxysilyle,
b = 0 à 1000,
c = indépendamment, b,
d = indépendamment, b,
et la somme des fragments portant les indices a, b, c et d vaut au moins 3, étant entendu que les groupes portant les indices a, b, c et d sont permutables librement sur la chaîne moléculaire, mais qu'au moins plus d'un groupe présentant l'indice a est disposé en position non terminale dans la chaîne polymère,
e = 1 à 10,
g + f = 3 et g vaut au moins 2,
h = 2, 3, 4 et étant entendu que
les différentes unités monomères, tant des fragments portant les indices a, b, c et d que de la chaîne polyalkylène du substituant R¹, peuvent être formées entre elles sous forme de blocs ou également se trouver dans une répartition statistique et sont en outre librement permutables entre elles.

4. Composition selon la revendication 3, **caractérisée en ce que** la composition présente exclusivement des prépolymères de formule (III) dans laquelle R⁸ est défini comme dans la revendication 4 et ne présente pas de prépolymères de formule (III) dans laquelle R⁸ représente hydrogène.

5. Composition selon la revendication 3, **caractérisée en ce que** la composition présente, outre des prépolymères de formule (III) dans laquelle R⁸ est défini comme dans la revendication 4, également des prépolymères de formule (III) dans laquelle R⁸ représente hydrogène.

6. Composition selon la revendication 5, **caractérisée en ce que** le rapport massique de prépolymères de formule (III) dans laquelle R⁸ est défini comme dans la revendication 4 aux prépolymères de formule (III) dans laquelle R⁸ représente hydrogène, vaut 100:>0 à 10:90.

7. Composition selon au moins l'une quelconque des revendications 1 à 6, **caractérisée en ce que** la composition contient un ou plusieurs additifs, choisis dans le groupe des plastifiants, des charges, des solvants et des additifs pour l'adaptation du comportement d'écoulement.

8. Composition selon au moins l'une quelconque des revendications 1 à 7, **caractérisée en ce qu'**elle contient une ou plusieurs substances, choisies dans le groupe comprenant le coréticulants, les agents ignifuges, les agents de désaération, les substances antimicrobiennes et les conservateurs, les colorants, les teintures et les pigments, les antigels, les fongicides et/ou les diluants réactifs ainsi que les complexants, les adjuvants de pulvérisation, les agents mouillants, les parfums, les agents de protection contre la lumière, les pièges de radicaux, les absorbants des UV et les stabilisants.

9. Composition selon au moins l'une quelconque des revendications 1 à 8, **caractérisée en ce que** la composition est une substance d'étanchéité ou un adhésif ou est utilisée pour la préparation d'une substance d'étanchéité ou d'un adhésif.

10. Composition selon au moins l'une quelconque des revendications 1 à 9, **caractérisée en ce que** la composition contient 10 à moins de 80 % en poids, par rapport à la composition totale, de prépolymère qui présente en moyenne entre 2,0 et 8,0 fonctions éthoxysilyle par prépolymère.

11. Composition selon l'une quelconque des revendications 1 à 10, **caractérisée en ce que** la composition présente 10 à 80 % en poids, par rapport à la composition totale, de prépolymère qui présente en moyenne entre 2,0 et 8,0 fonctions éthoxysilyle par prépolymère, des promoteurs d'adhérence en une proportion de 0,3 % en poids à 3,0 % en poids, des plastifiants en une proportion inférieure à 30 % en poids, le rapport massique du produit d'alcoxylation durcissable et des plastifiants valant de manière particulièrement préférée moins de 1,1 fois celle du produit d'alcoxylation, des charges en une proportion de 18 à 65 % en poids, des agents de dessiccation chimique de l'humidité en une proportion de 0,2 à 3,0 % en poids et des catalyseurs de durcissement en une proportion de 0,1 à 5,00 % en poids, à chaque fois par rapport à la composition totale.

12. Utilisation de compositions durcissables selon au moins l'une quelconque des revendications 1 à 11 pour le renforcement, le nivellement, la modification, le collage, l'étanchéification et/ou le revêtement de substrats.
